# EUROPÄISCHE PATENTANMELDUNG

(11) **EP 1 406 367 A1**
(43) Veröffentlichungstag der Anmeldung: **07.04.2004**
(21) Anmeldenummer: 03103611.4
(22) Anmeldetag: 30.09.2003
(51) Int. Cl.: H02J 7/00

(54) **Batteriegespeister Wechselrichter**

(30) Priorität: 01.10.2002 DE 10245839
(71) Anmelder: HILTI Aktiengesellschaft, 9494 Schaan (LI)
(72) Erfinder: Heigl, Bernd, 86199 Augsburg (DE); Riethmüller, Jörg, 86899 Landsberg (DE); Ziegler, Bernd, 86856 Hiltenfingen (DE)
(74) Vertreter: Wildi, Roland

(57) **Zusammenfassung**

Ein batteriegespeister Wechselrichter (1) für einen bürstenlosen Elektromotor (2) mit mehreren Spulensträngen (3a, 3b, 3c), welcher in einer Versorgungsstrommasche (4a) über zwei Versorgungsstromleitungen (5) mit einer speisenden Batterie (6) mit mehreren Batteriezellen (8) verbunden ist, wobei er in zumindest einer zweiten Versorgungsstrommasche (4b, 4c) über Versorgungsstromleitungen (5) mit der Batterie (6) verbunden ist.

## Beschreibung

Die Erfindung bezeichnet einen Wechselrichter für einen bürstenlosen Elektromotor mit mehreren Spulensträngen, welcher von einer Batterie mit mehreren Batteriezellen gespeist wird.

Für leistungsfähige Antriebe, bspw. in Handwerkzeugmaschinen, werden bürstenlose Elektromotoren eingesetzt, deren Spulenstränge von einem Wechselrichter gesteuert mit Strom versorgt werden. Der üblicherweise aus Leistungshalbleitern bestehende Wechselrichter selbst wird mit Gleichspannung gespeist, welche bei netzgespeisten Anwendungen in einem Gleichspannungszwischenkreis und bei netzfreien Anwendungen von einer Batterie erzeugt wird.

Bei üblichen Batterien mit mehreren in Serie angeordneten Batteriezellen führt die Steigerung der Kapazität der Batterie durch in Serie geschaltete Batteriezellen additiv zu einer hohen Batteriespannung, welche nur mit speziellen Leistungshalbleitern hinreichend hoher Sperrspannung schaltbar ist sowie bei Überschreitung der Schutzkleinspannung zusätzlicher Schutzmassnahmen an der Batterie und einem zugeordneten Ladegerät bedarf.

Nach der DE19526996 weist ein batteriegespeister Wechselrichter für einen bürstenlosen Elektromotor mit mehreren Spulensträngen eine, den Wechselrichter über genau eine Versorgungsstrommasche speisende Batterie mit mehreren in Serie angeordneten Batteriezellen auf, wobei die mehreren Batteriezellen über zwischenliegende Messanschlüsse mit einer Überwachungslogik verbunden sind, welche den Versorgungsstrom steuert. Der aus der Batterie entnehmbare Versorgungsstrom ist, um eine schädigende Tiefentladung einer schwächsten Batteriezelle aller in Serie angeordneten Batteriezellen der Versorgungsstrommasche zu vermeiden, nach oben begrenzt. Die Restkapazität der übrigen Batteriezellen ist für den Elektromotor nicht nutzbar, wodurch die Nutzleistung vorzeitig begrenzt wird.

Die Aufgabe der Erfindung besteht in der Realisierung eines batteriegespeisten Wechselrichters für einen bürstenlosen Elektromotor mit besserer Ausnutzung der Kapazität einer Batterie mit mehreren Batteriezellen. Ein weiterer Aspekt besteht in der Realisierung einer zugeordneten Batterie sowie eines dieser zugeordneten Ladegerätes.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist ein batteriegespeister Wechselrichter für einen bürstenlosen Elektromotor mit mehreren Spulensträngen eine den Wechselrichter in einer Versorgungsstrommasche über zwei Versorgungsstromleitungen speisende Batterie mit mehreren Batteriezellen auf, wobei zumindest eine zweite Versorgungsstrommasche über eine dritte Versorgungsstromleitung mit dem Wechselrichter verbunden ist.

Durch die mit dem Wechselrichter verbundene dritte Versorgungsstromleitung sind zumindest zwei unterschiedliche Versorgungsstrommaschen ausgebildet, welche verschiedene Zellenströme der Batteriezellen ermöglichen. Eine schwache Batteriezelle begrenzt somit nicht den entnehmbaren Versorgungsstrom einer anderen Batteriezelle, welche in einer anderen Versorgungsstrommasche angeordnet ist.

Vorteilhaft ist jeder Versorgungsstrommasche je ein Wechselrichterteil für je einen Spulenstrang des bürstenlosen Elektromotors zugeordnet, wodurch die Batteriezellen eine gleichmässige Last aufweisen.

Vorteilhaft ist der Wechselrichter mit Leistungshalbleitern wie Power-MOSFETs oder IGBT's realisiert, wodurch hoher Ströme verlustarm schaltbar sind.

Vorteilhaft ist der Wechselrichter zur gesteuerten Schaltung von zumindest drei Spulensträngen eines bürstenlosen Elektromotors ausgelegt, wodurch ein Drehfeld generierbar ist.

Vorteilhaft ist der Wechselrichter zur gesteuerten Schaltung von genau drei Spulensträngen eines bürstenlosen Elektromotors ausgelegt, was bezüglich kleiner Elektromotoren für Handwerkzeugmaschinen einen geeigneten Kompromiss darstellt.

Vorteilhaft weist der Wechselrichter je Versorgungsstrommasche einen Sensor, weiter vorteilhaft einen Stromsensor und/oder Spannungssensor und/oder Temperatursensor auf, wodurch von einem Steuermittel, wie einem Mikrocontroller der Zustand der Batteriezelle in der Versorgungsstrommasche überwachbar ist.

Vorteilhaft ist das Steuermittel steuernd mit dem Wechselrichter verbunden, wodurch der Wechselrichter in Abhängigkeit des Zustandes der Batteriezellen steuerbar ist, insbesondere derart, dass bezüglich der einzelnen Zellengruppen von Batteriezellen unzulässig hohe Ströme und/oder Tiefentladungen vermieden werden.

Die Erfindung wird bezüglich eines vorteilhaften Ausführungsbeispiels näher erläutert mit einer Darstellung als batteriegespeister Wechselrichter für einen bürstenlosen Elektromotor.

Nach der Darstellung weist ein batteriegespeister Wechselrichter 1 für einen bürstenlosen Elektromotor 2 mit drei Spulensträngen 3a, 3b, 3c eine den Wechselrichter 1 in drei Versorgungsstrommaschen 4a, 4b, 4c über sechs Versorgungsstromleitungen 5 mit Lastkontakten speisende Batterie 6 mit drei Zellenengruppen 7a, 7b, 7c von Batteriezellen 8 auf. Jeder Versorgungsstrommasche 4a, 4b, 4c ist je ein Wechselrichterteil 9a, 9b, 9c mit integrierten Leistungshalbleitern für je einen Spulenstrang 3a, 3b, 3c des bürstenlosen Elektromotors 2 zugeordnet. Der Wechselrichter 1 weist je Versorgungsstrommasche 4a, 4b, 4c je einen Sensor in Form von Stromsensoren 10, Spannungssensoren 11 und über Messkontakte 12 mit den Zellenengruppen 7a, 7b, 7c verbundene Temperatursensoren 13 in der Batterie 6 auf, die mit einem Steuermittel 14 in Form eines von einem Drehsensor 15 im Elektromotor 2 gesteuerten Mikrocontrollers verbunden sind, welcher steuernd mit dem Wechselrichter 1 verbunden ist.

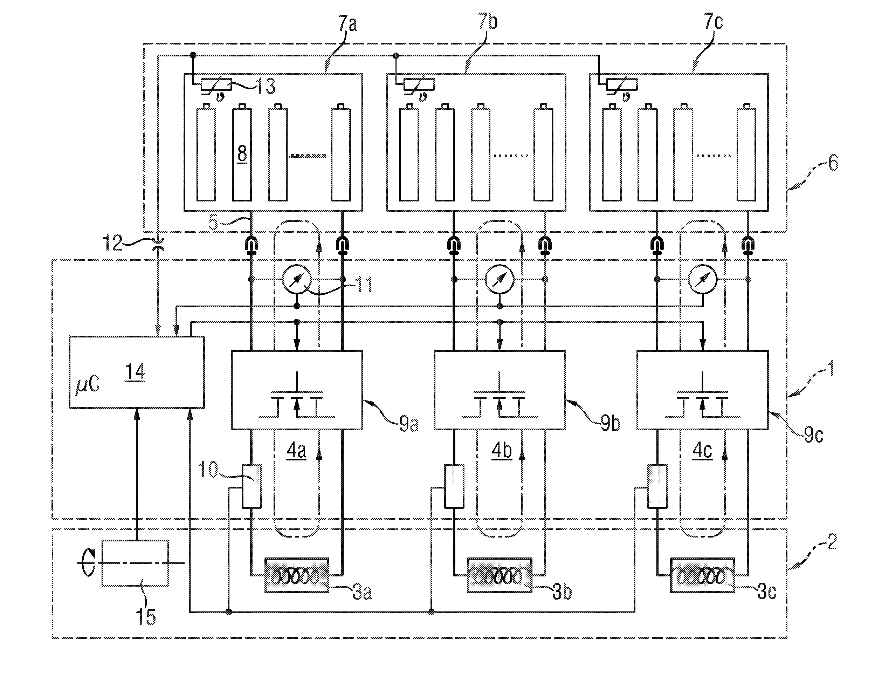

## Patentansprüche

1. Batteriegespeister Wechselrichter für einen bürstenlosen Elektromotor (2) mit mehreren Spulensträngen (3a, 3b, 3c), welcher in einer Versorgungsstrommasche (4a) über zwei Versorgungsstromleitungen (5) mit einer speisenden Batterie (6) mit mehreren Batteriezellen (8) verbunden ist, **dadurch gekennzeichnet, dass** er in zumindest einer zweiten Versorgungsstrommasche (4b, 4c) über Versorgungsstromleitungen (5) mit der Batterie (6) verbunden ist.

2. Wechselrichter nach Anspruch 1, **dadurch gekennzeichnet, dass** jeder Versorgungsstrommasche (4a, 4b, 4c) je ein Wechselrichterteil (9a, 9b, 9c) für je einen Spulenstrang (3a, 3b, 3c) des bürstenlosen Elektromotors (2) zugeordnet ist.

3. Wechselrichter nach nach Anspruch 1 oder 2, **dadurch gekennzeichnet, dass** er mit Leistungshalbleitern realisiert ist.

4. Wechselrichter nach einem der Ansprüche 1 bis 3, **dadurch gekennzeichnet, dass** er elektrisch zur gesteuerten Schaltung von zumindest drei, optional genau drei, Spulensträngen (3a, 3b, 3c) des bürstenlosen Elektromotors (2) ausgelegt ist.

5. Wechselrichter nach einem der Ansprüche 1 bis 4, **dadurch gekennzeichnet, dass** je Versorgungsstrommasche (4a, 4b, 4c) ein Sensor vorhanden ist, welcher mit einem Steuermittel (14) verbunden ist.

6. Wechselrichter nach Anspruch 5, **dadurch gekennzeichnet, dass** der Sensor als ein Spannungssensor (10) und/oder Stromsensor (11) und/oder Temperatursensor (13) ausgebildet ist, und dass optional der Temperatursensor (13) in der Batterie (6) angeordnet und über Messkontakte (12) mit dem Steuermittel (14) verbunden ist.

7. Wechselrichter nach einem der Ansprüche 5 oder 6, **dadurch gekennzeichnet, dass** das Steuermittel (14) steuernd mit dem Wechselrichter (1) verbunden ist.
